Europäisches Patentamt

(19) European Patent Office

Office européen des brevets

(11) Veröffentlichungsnummer: **0 235 669 B1**

(12) **EUROPÄISCHE PATENTSCHRIFT**

(45) Veröffentlichungstag der Patentschrift:
06.03.91 Patentblatt 91/10

(51) Int. Cl.⁵: **F02D 41/38, F02D 41/14**

(21) Anmeldenummer: 87102259.6

(22) Anmeldetag: 17.02.87

(54) **Kraftfahrzeugeinspritzpumpe zur Versorgung der Brennräume von für Fahrzeugantriebe vorgesehenen Brennkraftmaschinen.**

(30) Priorität: 22.02.86 DE 3605824

(43) Veröffentlichungstag der Anmeldung:
09.09.87 Patentblatt 87/37

(45) Bekanntmachung des Hinweises auf die Patenterteilung:
06.03.91 Patentblatt 91/10

(84) Benannte Vertragsstaaten:
DE FR GB IT

(56) Entgegenhaltungen:
EP-A- 0 049 702
DE-A- 2 244 017
DE-A- 2 350 224
DE-A- 3 204 971

(56) Entgegenhaltungen:
DE-A- 3 427 224
FR-A- 2 473 116
US-A- 4 416 232
PATENT ABSTRACTS OF JAPAN, Band 7, Nr. 104 (M-212)[1249], 6. Mai 1983; & JP-A-58 25 526 (ISUZU JIDOSHA K.K.) 15-02-1983

(73) Patentinhaber: ROBERT BOSCH GMBH
Postfach 50
W-7000 Stuttgart 1 (DE)

(72) Erfinder: Höfer, Gerald
Schönblickstrasse 16
W-7251 Weissach-Flacht (DE)
Erfinder: Straubel, Max, Dr.
Ontariostrasse 30B
W-7000 Stuttgart 61 (DE)
Erfinder: Die andere Erfinder haben auf ihre Nennung verzichtet

## Beschreibung

### Stand der Technik

Die Erfindung geht von einer Kraftstoffeinspritzpumpe nach der Gattung des Hauptanspruchs aus. Ein Kraftfahrzeug stellt aufgrund der elastischen Aufhängung von Brennkraftmaschine und Fahrwerk ein schwingungsfähiges Gebilde dar, das bei Störeinflüssen zu mehr oder weniger gedämpften Schwingungen angeregt werden kann. Störeinflüsse sind z. B. ein Kraftstoffmengensprung bei der Kraftstoffzumeßrate, mit der Brennräume der Brennkraftmaschine versorgt werden oder ein von außen, z. B. durch ein Schlagloch in der Fahrbahn verursachter Momentensprung des Fahrwiderstandes. Die Schwingungen, die sich zum Beispiel durch Drehzahländerungen oder Relativbewegungen zwischen Brennkraftmaschine und Karosserie unangenehm bemerkbar machen, liegen normalerweise zwischen 1 und 8 Hz, vorzugsweise um 5 Hz und werden als Ruckeln bezeichnet. Im Ergebnis sind es Längsschwingungen in Fahrtrichtung des Fahrzeuges, die durch Reaktionen des Fahrers über das Gaspedal noch aufgeschaukelt werden und durch weiche Fahrzeugaufhängungen begünstigt werden. Kennzeichnend ist dabei vor allem die Phasenverschiebung zwischen auftretender Drehzahl bzw. Fahrgeschwindigkeit und Kraftstoffzumeßmenge.

Um dem Ruckeln zu begegnen, sind, wie z. B. durch die DE-OS 33 43 854 bekannt, Einrichtungen zur phasenverschobenen Beaufschlagung eines Korrektursignals auf eine in Abhängigkeit von Betriebsparametern berechnete Stellgröße für die Kraftstoffmengeneinstellung vorgesehen. Dabei erfolgt der Eingriff ausschließlich im Rahmen eines elektronischen Reglers, wobei am Ausgang des Reglers eine korrigierte Stellgröße für das elektromagnetisch betätigte Fördermengen-verstellorgan auftritt, wobei bei der Stellgröbe sowohl der derzeit vorliegende Betrienszustand der Brennkraftmaschine als auch das Fahrverhalten bzw. das Ruckeln berücksichtigt ist.

Durch die DE-A 34 27 224 ist es ferner bekannt, statt eines elektronischen Eingriffs auch bei einer mechanisch geregelten Kraftstoffeinspritzpumpe eine Ruckeldämpfung durch aktive Beeinflussung der Kraftsoffeinspritzmenge, insbesondere zur Verbesserung der Phasenlage zu erzielen. Bei einer solchen Krafstoffeinspritzpumpe gemäß der Gattung des Hauptanspruchs ist die Brennkraftmaschine elastisch in der Karosserie des Fahrzeugs gelagert und ist mit der Brennkraftmaschine die Kratstoffeinspritzpumpe verbunden. An die Karosserie angelenkt ist ein eine Differenziereinrichtung enthaltende Verbindung zu einem Mengenverstellorgan der Kraftstoffeinspritzpumpe angelenkt, die derart wirkt, daß bei schnellen Relativbewegungen der Brennkraftmaschine zur Karosserie entsprechend schnelle Korrekturen der Kraftstofeinspritzmenge vorgesehen werden. Dabei gelangt zur Korrekturverstellung jedoch nur das differenzierte Signal derart, daß bei langsamen Relativbewegungen der Brennkraftmaschine eine Kraftstoffeinspritzmengenverstellung nicht erfolgt. Bei dieser Einrichtung greift die Korrektur beim Reglerhebel ein, an dem die Regelfeder eines mechanischen Drehzahlreglers angehängt ist und der zur Eingabe des Drehmomentwunsches bzw. zur Einstellung einer Drehzahl dient. In einer anderen Ausführung erfolgt der Eingriff über das Verstellglied eines Fliehkraftdrehzahlreglers auf hydraulischem Wege. Beide Eingriffe haben den Nachteil, daß sie einerseits mittelbar unter Zwischenschaltung elastischer Glieder auf das Kraftstofffördermengenverstellorgan wirken und andererseits von Betriebsparametern bzw. der willkürlichen Laständerung beeinflußt werden.

### Vorteile der Erfindung

Die erfindungsgemäße Kraftstoffeinspritzpumpe mit den kennzeichnenden Merkmalen des Hauptanspruchs hat den Vorteil, daß eine Kraftstoffeinspritzmengenkorrektur sehr direkt auf das Kraftstofffördermengenverstellorgan gegeben werden kann unabhängig von Fördermengenverstellungen in Abhängigkeit anderer, üblicherweise bei Kraftstoffeinspritzpumpen vorgesehenen Betriebsparametern. Der Eingriff erfolgt unverzögert und unbeeinflußt von anderen Stellgrößen, denen die Korrektur lediglich aufgeschaltet wird.

Eine besonders einfache Ausgestaltung der Erfindung ist durch Anspruch 2 gekennzeichnet, wobei insbesondere mit den Ausgestaltungen gemäß den Ansprüchen 12 und 13 der z. B. bei einer Verteilereinspritzpumpe bekannte Einstellhebel besonders günstige Eingriffsmöglichkeiten für die Grundeinstellung der Kraftstoffeinspritzpumpe bietet. Solche Einstellhebel sind z. B. durch die DE-OS 23 49 655 oder DE-OS 29 09 415 bekannt. Hier lassen sich vorteilhaft Betätigungsorgane gemäß den kennzeichnenden Merkmalen von Anspruch 14, 15 oder 16 anordnen, denen an dieser Stelle ausreichend Platz zur Verfügung steht. Solche Eingriffsmöglichkeiten sind jedoch nicht auf Verteilereinspritzpumpen und insbesondere Verteilereinspritzpumpen der Hubkolbenbauart gemäß dem obengennanten Stand der Technik beschränkt. Eine vorteilhafte Ausgestaltung der Erfindung gemäß Anspruch 3 findet Anwendung speziell bei Einspritzpumpen, die durch Ringschieber gesteuert werden.

In vorteilhafter Weiterbildung erfolgt die Ansteuerung gemäß einem Antiruckelsignal nach Anspruch 4, das nach Anspruch 5 auch über ein Differenzierglied gewonnen werden kann. Dies hat den Vorteil, daß gemäß Anspruch 7 auch die Masse der Brennkraftmaschine für die Ermittlung des Ruckelns herangezogen werden kann.

Eine sehr genaue Erfassung des Ruckelns ist durch die Erfassung eines Drehzahlsignals, dessen dem überlagerte Ruckelschwingungen über ein Differenzierglied gemäß Anspruch 6 in das Antiruckelsignal umgewandelt wird. Dies hat den Vorteil, daß die Verhältnisse der Aufhängung zum Beispiel bei der Signalerfassung gemäß Anspruch 7 und die Charakteristika der Aufhängung sich nicht unmittelbar auf die Größe und Wirksamkeit bezüglich Phasenlage des Antiruckelsignals auswirkt. Um solchen Einflußgrößen auszuweichen, ist auch eine Ausgestaltung gemäß Anspruch 8 möglich, wobei gemäß Anspruch 11 vorteilhaft die Signalbildung über ein Pendel im Innern der Kraftstoffeinspritzpumpe selbst gewonnen wird. Dies hat den Vorteil, daß keine zusätzlichen Maßnahmen am Fahrzeug im Motorraum zwischen Brennkraftmaschine bzw. der mit dieser verbundenen Kraftstoffeinspritzpumpe und Karosserie vergenommen werden müssen. Es ergibt sich hier ein Vorteil, der auch bei der Ausgestaltung nach Anspruch 6 vorliegt, wobei die Verwirklichung in einfacher Weise erfolgen kann.

Vorteilhaft erfolgt die Übertragung des Antiruckelsignals auf das Betätigungsorgan auf hydraulischen Weg, da hier eine sichere Übertragung unabhängig von dem elektrischen Bordnetz oder mechanischen Reibungen und Hystereseinfluß möglich ist. Dies bietet zudem auch den Vorteil, daß der Ruckelsignalgeber nur nach Gesichtspunkten der günstigsten Signalerfassungsstelle eingebaut werden kann. Zudem läßt sich dabei in vorteilhafter Weise ein hydraulisch arbeitendes Differenzierglied verwirklichen gemäß Ansprüchen 23 und 24. Zur Überbrückung bei besonders schwierigen Einbauverhältnissen kann auch gemäß Anspruch 20, 21 oder 22 eine elektrische Betätigung, gegebenenfalls in Verbund mit einem fluidischen Ruckelsignalgeber gemäß Anspruch 20 Verwendung finden. In besonders vorteilhafter Weise kann der im Innern zum Beispiel einer Verteilerkraftstoffeinspritzpumpe zur Verfügung stehende Innenraumdruck als Arbeitsdruck für einen Stellmotor gemäß Anspruch 22 verwendet werden, dessen Stellraumdruck mit Hilfe eines vom Antiruckelsignal gesteuerten Magnetventils gesteuert wird.

Wie durch Ansprüche 27 und 28 gekennzeichnet, ist es von Vorteil, über zwischengeschaltete Differenzierglieder ein genaueres Signal für das Auftreten von Ruckelbewegungen zu erzielen und je nach Ausgestaltung der Differenzierglieder nur impulsweise eine Korrektur der Kraftstoffeinspritzmenge vorzusehen, wobei diese Korrektur um bestimmte vorgegebene Größen vorgenommen werden kann, durch Anschläge bestimmt, gemäß z. B. der Ausgestaltung nach Anspruch 12. Die Aufschaltgrößen bzw. Differenzgrößen können aber auch in Abhängigkeit von bestimmten Parametern oder bestimmter Größenordnung der Ruckelschwingung geändert werden, wozu sich auch bei der erfindungsgemäßen Kraftstoffeinspritzpumpe auf mechanischem Wege die Möglichkeit bietet.

Durch die in den übrigen Unteransprüchen aufgeführten Maßnahmen sind vorteilhafte Weiterbildungen und Verbesserungen gegeben.

Zeichnung

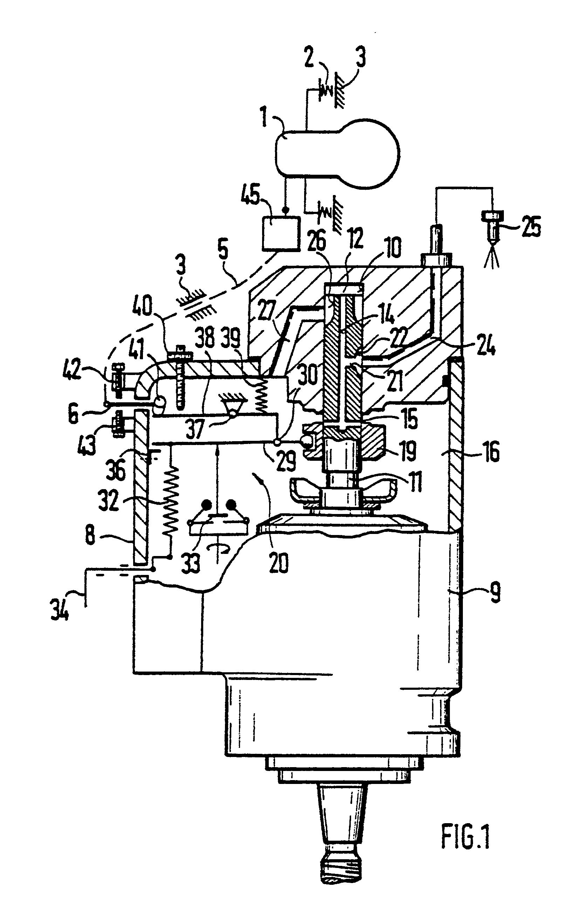

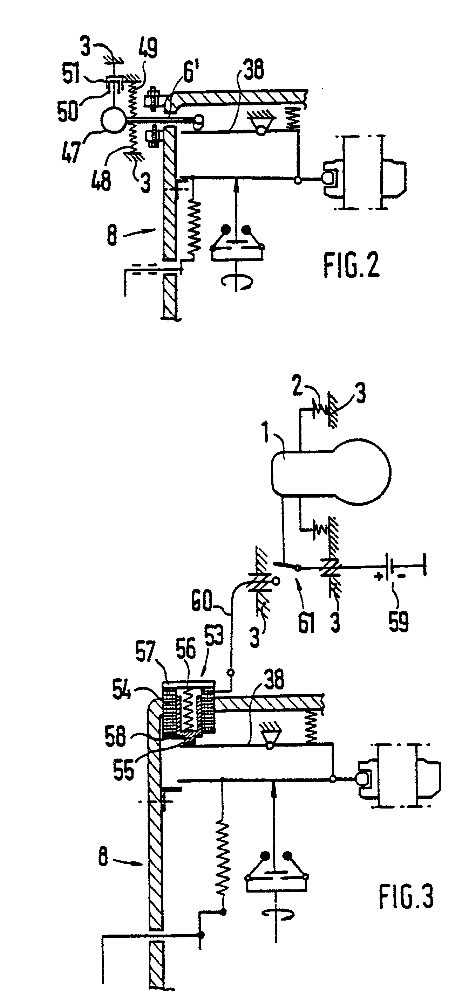

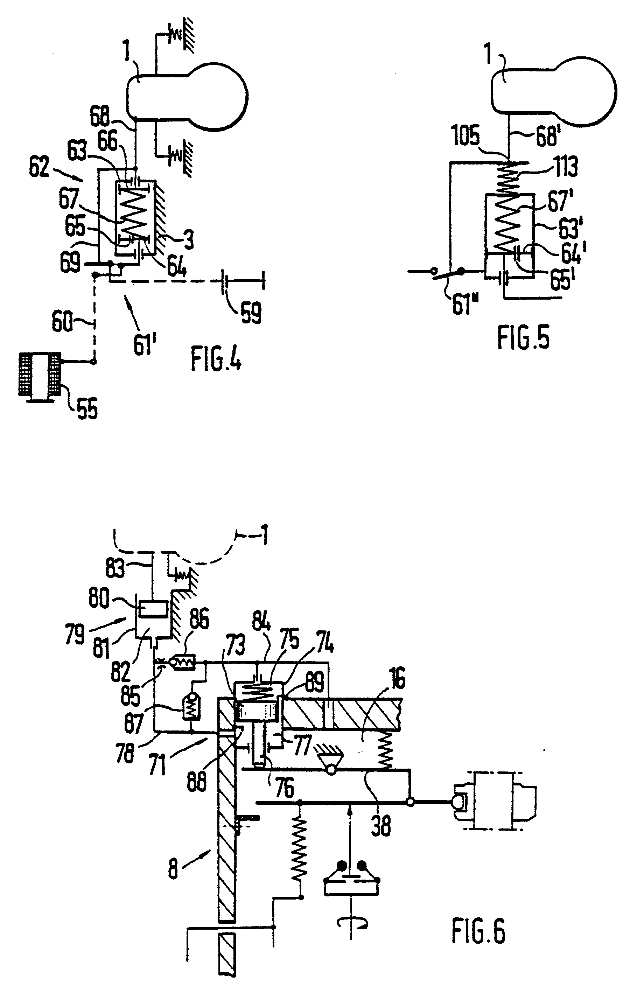

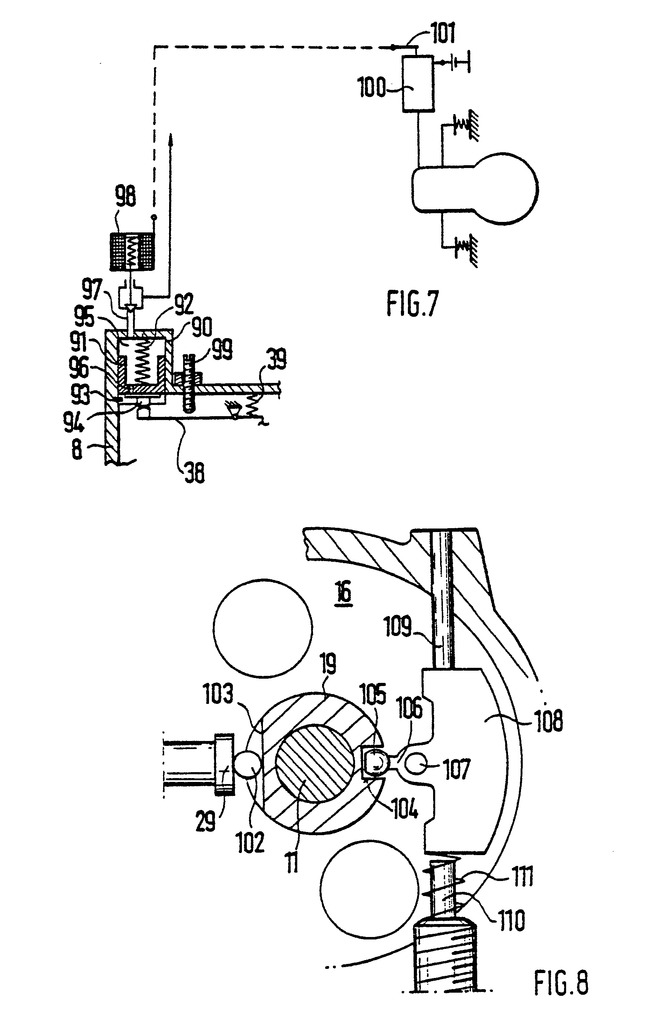

Acht Ausführungsbeispiele der Erfindung sind in der Zeichnung dargestellt und werden in der nachfolgenden Beschrei bung näher erläutert. Es zeigen Figur 1 ein erstes Ausführungsbeispiel anhand eines Teilschnittes durch eine Verteilerkraftstoffeinspritzpumpe mit direkt aus der Querbewegung der Brennkraftmaschine abgeleiteter Betätigung eines Stellnockens, Figur 2 ein zweites Ausführungsbeispiel mit eben dem Teilausschnitt einer Verteilereinspritzpumpe mit federnd aufgehängter Masse zur Betätigung des Stellnockens gemäß Figur 1, Figur 3 ein drittes Ausführungsbeispiel der Erfindung mit einem am Einstellhebel einer Verteilerkraftstoffeinspritzpumpe angreifenden Stellmagneten, dessen Stromkreis über eine direkt von der Brennkraftmaschinenquerbewegung angesteuerten Schalter geschaltet wird, Figur 4 ein viertes Ausführungbeispiel in Abwandlung zum Ausführungsbeispiel nach Figur 3 mit einem zwischen Brennkraftmaschine und Schalter geschalteten Differenzierglied, Figur 5 ein fünftes Ausführungsbeispiel mit einem gegenüber Figur 4 modifizierten Differenzierglied, Figur 6 ein sechstes Ausführungsbeispiel mit hydraulischer Übertragung der Brennkraftmaschinenquerbewegung auf einen hydraulischen Stellmotor zur Einstellung des Einstellhebels einer Verteilereinspritzpumpe, Figur 7 ein siebtes Ausführungsbeispiel als Modifikation des Ausführungsbeispiels nach Figur 6 mit einem hydraulischen Stellmotor zur Betätigung des Einstellhebels einer Verteilereinspritzpumpe und mit elektromagnetischer Steuerung des Arbeitsdrucks des hydraulischen Stellmotors in Abhängigkeit von der Stellbewegung und Figur 8 ein achtes Ausführungsbeispiel der Erfindung mit einer im Innern einer Verteilerkraftstoffeinspritzpumpe angebrachten, das Ruckeln erfassenden Masse zur Verstellung eines als Ringschieber ausgebildeten Kraftstoffmengenverstellorgans einer Kraftstoffeinspritzpumpe.

Beschreibung der Ausführungsbeispiele

Eine symbolisch dargestellte Brennkraftmaschine 1 ist über elastische Lager 2 in einer nicht weiter dargestellten Karosserie 3 eines von dieser Brennkraftmaschine angetriebenen Fahrzeugs aufgehängt. Bei diesen Lagern 3 handelt es sich in der Regel um gummielastische Lager, die sowohl Fede-

rungs- als auch Dämpfungseigenschaften aufweisen. Diese werden regelmäßig dafür vorgesehen, daß nicht Schwingungen der Brennkraftmaschine auf die Karosserie unmittelbar übertragen werden. Eigenbewegungen der Brennkraftmaschine, insbesondere um deren Längsachse treten bei schnellen Last- oder Drehmomentenänderungen auf. Insbesondere aber reagiert die Brennkraftmaschine auf das eingangs genannte Ruckeln. Mit dem Motor ist eine Übertragungseinrichtung 5 starr verbunden, die an ihrem anderen Ende mit einem Stellhebel 6 verbunden ist. Dabei stützt sich die Übertragungseinrichtung ortsfest an der Karosserie ab. Sie kann z. B. als Bowdenzug oder als Hebel-Gestängeeinrichtung ausgeführt sein. Mit der Brennkraftmaschine 1 ist eine Kraftstoffeinspritzpumpe, hier eine Verteilerkraftstoffeinspritzpumpe 8 verbunden, fest verbunden. Wesentliche Aufgabe der Übertragungseinrichtung ist es nun, die Bewegung der Brennkraftmaschine in Relation zur Karosserie auf den Stellhebel 6 der an ihr montierten Kraftstoffeinspritzpumpe zu übertragen.

Fahrzeuge, bei denen ein Ruckeln als besonders störend empfunden wird, sind insbesondere Personenkraftfahrzeuge. Die dort vorherrschend weiche, den Fahrkomfort erhöhende Aufhängung der Karosserien führt insbesondere auch in Verbindung mit Karosserien kleiner Masse zu dem eingangs genannten Ruckeln. Kraftstoffeinspritzpumpen für solche Fahrzeuge, die mit Dieselmotoren ausgerüstet sind vorwiegend Verteilerkraftstoffeinspritzpumpen, z. B. der Hubkolbenbauart, wie sie in der Figur 1 in einem Teilschnitt im Prinzip dargestellt ist. Der Eingriff kann aber auch bei Kraftstoffeinspritzpumpen anderer Bauart vorgenommen werden.

Bei der hier beispielsweise ausgeführten Verteilerkraftstoffeinspritzpumpe ist im Gehäuse 9 derselben ein Pumpenzylinder 10 vorgesehen, in dem ein Pumpenkolben 11 durch nicht weiter dargestellte Mittel in eine hin- und hergehende und zugleich rotierende Bewegung versetzt wird. Von dem Pumpenkolben wird im Pumpenkolbenzylinder ein Pumpenarbeitsraum 12 eingeschlossen, der über eine axiale Entlastungsleitung 14 mit einer Entlastungsöffnung 15 an einem in einem Saugraum 16 regenden Teil des Pumpenkolbens verbunden ist. Der Saugraum wird von einer hier nicht weiter dargestellten Kraftstofförderpumpe mit Kraftstoff unter Druck gefüllt und dient zur Versorgung des Pumpenarbeitsraumes 12 im bekannter Weise. Auf dem in den Saugraum 16 ragenden Teil des Pumpenkolbens ist als Kraftstofffördermengenverstellorgan ein Ringschieber 19 angeordnet, der auf den Pumpenkolben dicht verschiebbar ist und zum Beispiel mit seiner oberen Stirnfläche die Entlastungsöffnung 15 steuert. Dabei nimmt der Ringschieber 19 eine von einem Regler 20 bestimmte Axial-stellung auf dem Pumpenkolben ein, während der Pumpenarbeitsraum im Laufe des Pumpenkolbenförderhubs ab Aufsteuern der zunächst geschlossenen Entlastungsöffnung 15 mit dem Saugraum verbunden wird. Ab diesem Punkt wird während des Förderhubs des Pumpenkolbens die Förderung von Kraftstoff aus dem Pumpenarveitsraum 12 durch die Entlastungsleitung 14 und eine von dieser abzweigende Querbohrung 21, die zu einer Verteileröffnung 22 führt, unterbunden. Die Verteileröffnung 22 arbeitet mit entsprechend der Zahl der zu versorgenden Brennräume der Brennkraftmaschine am Umfang des Pumpenzylinders verteilt angeordneten Druckleitungen 24 zusammen, die zu den jeweiligen Einspritzventilen 25 führen. Während des Drehung des Pumpenkolbens und seinem Förderhub kommt die Verteileröffnung nacheinander jeweils mit einer dieser Druckleitungen in Verbindung. so daß der aus dem Pumpenarbeitsraum über die Entlastungsleitung 14 verdrängte kraftstoff zu dem Einspritzventil 25 gelangt.

Die Kraftstoffversorgung des Pumpenarbeitsraumes erfolgt über Saugnuten 26, die entsprechend der Zahl der zu versorgenden Druckleitungen am Umfang des Pumpenkolbens verteilt angeordnet sind und in ständiger Verbindung mit dem Pumpenarbeitsraum stehen. Während des Saughubs kommt jeweils eine dieser Saugnuten mit einer vom Pumpensaugraum 16 abzweigenden Saugleitung 27 in Verbindung.

Die axiale Lage des Ringschiebers 19 bestimmt den Förderhub, über den wirksam der Pumpenkolben Kraftstoff unter Hochdruck zu den Einspritzventilen fördert. Die axiale Einstellung ist durch einen Verstellhebel 29 verstellbar, der um eine Achse 30 schwenkbar ist und an dem entgegen der Kraft einer Regelfeder 32 ein Drehzahlgeber 33, häufigerweise ein Flieh kraftdrehzahlgeber wirkt. Dieser wird synchron zur Antriebsdrehzahl der Einspritzpumpe angetrieben und ist bestrebt, entgegen der Kraft der Feder 32 das Kraftstoffmengenverstellorgan, den Ringschieber 19, auf Stellungen entsprechend einer geringeren Kraftstoffeinspritzmenge zu verschieben. Dies tritt regelmäßig im Abregelfall auf. Die Regelfeder 32 ist in bekannter Weise durch einen willkürlich vom Betreiber der Brennkraftmaschine verstellbaren Verstellhebel 34 entsprechend dem Drehmomentwunsch bzw. entsprechend der Drehzahl bei gegebener Last verstellbar, dabei wird die Regelfeder 32 mehr oder weniger vorgespannt oder, bei einem Verstellregler, als Federpaket zusammen mit dem Verstellhebel starr verstellt. Im Abregelfall wird dann die Kraft der Feder 32 durch den Drehzahlgeber 33 überwunden. Für die Einstellung der maximalen Kraftstoffeinspritzmenge ist ein Vollastanschlag 36 vorgesehen, der gegenenfalls auch in an sich bekannter Weise verstellbar und auch in Abhängigkeit von Betriebsparametern verstellbar ist.

Die Grundeinstellung der Verteilerkraftstoffeinspritzpumpe dieser bekannten Bauart erfolgt mit Hilfe eines Einstellorgans in Form eines um einen gehäusefesten Punkt 37 schwenkbaren Einstellhebels 38, an dessem einen Ende die Achse 30 des Verstellhebels 29 angebracht ist und der an diesem Hebelarm auch durch die Kraft einer Rückstellfeder 39 belastet ist und an dessem anderen Hebelarm ein verstellbarer Anschlag 40 vorgesehen ist, an den dieser Einstellhebel durch die Kraft der Feder 39 gehalten wird. Die Feder schwenkt den Einstellhebel dabei so, daß die Achse und zugleich die Grundeinstellung des Ringschiebers 19 in Richtung geringerer Kraftstoffeinspritzmenge verschoben wird. Mit dem verstellbaren Anschlag kann somit in an sich bekannter Weise feinfühlig die Grundeinstellung des Ringschiebers 19 in Mehr- oder Mindermenge verschoben werden.

Anstelle des Anschlags 40 oder in Ergänzung dazu ist nun erfindungsgemäß ein Betätigungsorgan in Form eines Nockens 41 vorgesehen, der von dem Verstellhebel 6 verdrehbar ist und dabei den Einstellhebel 38 in Richtung Mehr- oder Mindermenge je nach Drehstellung schwenkt. Der Grad der Verstellung ist durch einen ersten Anschlag 42 und einen zweiten Anschlag 43 für den Verstellhebel 6 begrenzt, welche beiden Anschläge einstellbar sind und mit denen auch an Stelle des sonst bei solchen Verteilerkraftstoffeinspritzpumpen vorgesehen Anschlags 40 die Höchsteinspritzmenge eingestellt und begrenzt werden kann. Wie oben bereits ausgeführt, ist der Stellhebel 6 entsprechend dem Antiruckelsignal verstellbar, das im ausgeführten Beispiel mechanisch durch die Querbewegung der Brennkraftmaschine 1 erfaßt wird. Schwenkt die Brennkraftmaschine aus, so erfolgt die Querbewegung mit dem Weg um 90° phasenverschoben gegenüber der Geschwindigkeit der Querbewegung bzw. nochmals 90° phasenverschoben zur diese Geschwindigkeit auslösenden Beschleunigung. Mit dem Wegsignal als Antiruckelsignal gelingt es nun Ursache der Phasenverschiebung zwischen Drehzahl und Einspritzmenge entgegenzuwirken und gegensteuernd die momentane Kraftstoffeinspritzmenge zu verändern. Insofern kann man die Kraftstoffeinspritzmenge phasengleich zur Beschleunigung einstellen. Solche Eingriffe können natürlich auch entsprechend einem aus der Drehzahl der Brennkraftmaschine gebildeten Antiruckelsignal mit geeigneten Betätigungsorganen, wie in den nachfolgenden Ausführungsbeispielen dargestellt, vorgenommen werden. Dieses Antiruckelsignal kann dabei sowohl als mechanische als auch elektrische Größe gebildet werden.

Im ausgeführten Beispiel erfolgt die Übertragung der Bewegung der Brennkraftmaschine unmittelbar auf den Verstellhebel 6, um langsame Änderungen, die nicht als Ruckeln zu werten sind, als Beeinflussungsgröße auszuschalten, kann vorteilhaft auch in die Verbindung zwischen Brennkraftmaschine 1 und Stellhebel 6 bzw. Nocken 41 ein Differenzierglied 45 geschaltet werden, derart, wie es in den nachfolgenden Ausführungsbeispielen noch dargestellt werden wird.

Beim Ausführungsbeispiel nach Figur 2 ist im wesentlichen der gleiche Ausschnitt aus der Verteilerkraftstoffeinspritzpumpe 8 wiedergegeben, nur daß hier statt einer Verbindung zur Brennkraftmaschine 1 an dem Stellhebel 6' eine zusätzliche Masse 47 befestigt ist und sich der Hebel zwischen einer ersten Feder 48 und einer zweiten Feder 49 zur Karosserie 3 hin abstützt. Mit der Masse 47 ist in Bewegungsrichtung des Stellhebels 6' ferner ein Dämpfungskolben 50 verbunden, der in einen sich ortsfest an der Karosserie 3 abstützenden Dämpfungszylinder 51 bewegt.

Kommt bei dieser Ausgestaltung die Karosserie in eine ruckelnde Schwingungsbewegung, so bewegt sich die Masse 47 aufgrund ihrer Massenträgheit relativ zur Karosserie 3, in ähnlicher Weise, wie das beim Ausführungsbeispiel nach Figur 1 durch die Brennkraftmaschine geschieht. Die Ausschwenkbewegung der Masse 47 am Hebelarm des Stellhebels 6' gegen die Rückstellkräfte der ersten Feder 48 und der zweiten Feder 49 wird weiterhin durch die Kolben-Zylinder-Kombination 50/51 gedämpft. Diese Einheit kann auch als Differenzierglied aufgefaßt werden, durch das bei Relativbewegung der Karosserie 3 zur Einspritzpumpe 8 die Masse 47 ausgelenkt, der Stellhebel 6 geschwenkt und die Kraftstoffeinspritzmenge über den Einstellhebel 38 verändert wird. Auch wird um 180° zur Auslenkbewegung verschoben, die der Brennkraftmaschine zugeführte Kraftstoffmenge und damit das von dieser aufgebrachte Drehmoment geändert und dabei die die Auslenkbewegung auslösende Beschleunigung kompensiert.

Statt des in den Figuren 1 und 2 dargestellten Betätigungsorgans in Form eines Nocken kann nun auch gemäß Figur 3 ein Stellmagnet 53 vorgesehen werden, der an derselben Stelle des Einstellhebels 38 bei ansonsten in gleicher Weise ausgeführter Kraftstoffeinspritzpumpe angreift. Der Stellmagnet weist dabei eine Spule 54 auf, in deren Kern ein Anker 55 gegen die Kraft einer Rückstellfeder 56 bewegbar ist. Der Anker weist dabei einen ersten Anschlag 57 und einen zweiten Anschlag 58 auf, die hier zwar nicht weiter gezeigt, aber dennoch in an sich bekannter Weise einstellbar sind. Die Spule 54 ist mit einer Stromquelle 59 über eine Leitung 60 verbunden, in der ein Schalter 61 eingebaut ist. Dieser ist mit seinem beweglichen Teil unmittelbar mit der Brennkraftmaschine 1 gekoppelt, die gemäß Figur 1 aufgehängt ist. Durch die Querbewegung der Brennkraftmaschine in ihren Lagern 2 wird der Schalter 61 entweder geschlossen oder geöffnet. Dementsprechend wird der Anker gegen die Kraft der Feder 56 entweder angezogen oder durch diese in seine zweite Endstellung gebracht. Mit dieser Ausgestaltung wird dieselbe Wirkung erzielt, wie sie durch die mechanische Übertragungseinrichtung der Brennkramtfaschinenbewegung gemäß Figur 1 erzielt wird. Wird das von der Brennkraftmaschine abzugebende Drehmoment erhöht, so schließt der Schalter 61 und der Stellmga-

gnet 53 reduziert die eingestellte Kraftstoffeinspritzmenge unabhängig von der Funktion des Reglers durch Verstellen des Einstellhebels 38. Dem parallel laufen, wie gesagt und wie auch bei den Ausführungsbeispielen nach Fig. 1 und 2, die normalen Regelfunktionen des Reglers, so daß die eigentliche Kraftstofffördermengenregelung nicht beeinflußt wird. Beim Zurückschwingen der Brennkraftmaschine öffnet der Schalter 61 wieder und es wird bei abfallendem Anker 55 die Kraftstoffeinspritzmenge erhöht.

Die in Figur 2 mit der Zusatzmasse 47 gezeigte Alternative ist prinzipiell auch für diese Ausführungsform anwendbar. Statt der unmittelbaren Koppelung der Brennkraftmaschine mit dem Schalter 61 kann vorteilhafterweise auch ein Differenzierglied 62 zwischen Brennkraftmaschine und Schalter eingeschaltet werden. Mit einem solchen Differenzierglied wird nur die schnelle Wegänderung als Schaltimpuls auf den Schalter 61' gegeben, während langsame Bewegungen als Nichtruckeln erkannt und ausgeschaltet werden. Ausgeführt ist das Differenzierglied 62 als ortsfest mit der Karosserie 3 verbundender Zylinder 63, der ein geschlossenes Gehäuse darstellt. In dem geschlossenen Gehäuse ist eine verstellbare Wand 64 als im Zylinder dichtverschiebbarer Kolben vorgesehen, der eine Drosselbohrung 65 aufweist, über die die Gehäuseteile vor und nach der beweglichen Wand miteinander verbunden sind. Es ist ferner in dem geschlossenen Gehäuse bzw. im Zylinder 63 ein Federteller 66 verschiebbar, zwischen dem und der verschiebbaren Wand 64 eine Druckfeder 67 eingespannt ist. Der Federteller 66 ist in bezug auf das in dem geschlossenen Gehäuse eingeschlossenen Fluid, Gas oder Flüssigkeit, frei beweglich, so daß selbst bei schnelleren Bewegungen des Federtellers an diesem keine Fluiddrücke aufgebaut werden.

Von der beweglichen Wand 64 führt ein Gestänge nach außen und ist dort mit einem ersten Teil des Schalters 61 verbunden und von dem Federteller 66 führt aus dem geschlossenen Gehäuse dicht ein Betätigungsteil 68 heraus, über das der Federteller 66 mit der Brennkraftmaschine oder eine relativ zur Karosserie bewegten, elastisch aufgehängten Masse in Bewegungsrichtung derselben verbunden ist. Von dem Betätigungsteil führt ferner eine starre Verbindung 69 zu dem anderen Teil des Schalters 61, der bei Relativbewegung von beweglicher Wand 64 zu Federteller 66 geschlossen bzw. geöffnet wird. Der Schalter 61' liegt wie beim Ausführungsbeispiel nach Figur 3 in der Leitung 60 von der Spannungsquelle 59 zum Stellmagneten 55.

Tritt bei der Brennkraftmaschine eine Stellbewegung schneller Art auf, so wirkt die bewegliche Wand 64 zunächst als stehende Wand aufgrund des Drosseleffekts der Drossel 65. Der Federteller schiebt demzufolge die Druckfeder 67 zusammen und betätigt über die starre Verbindung 69 den Schalter 61'. Tritt jedoch nur eine langsame Bewegung der Brennkraftmaschine bzw. der elastisch aufgehängten Masse auf, so kann über die Drossel 65 ein Druckausgleich erfolgen, so daß die Einheit bewegliche Wand 64, Feder 67 und Federteller 66 zusammen im geschlossenen Gehäuse 63 verschoben werden, worauf die Schaltstellung des Schalters 61 unverändert bleibt. Im Prinzip macht somit der Schalter 61' die Bewegung der bewegten Massen bei langsamen Bewegungen mit und öffnet jeweils mit der Ruckelfrequenz bei 3 bis 4 Hz. Ein Differenzierglied der genannten Bauart kann zum Beispiel auch Anwendung beim Ausführungsbeispiel nach Figur 1 finden.

In Figur 5 ist die Umkehrung des Arbeitsprinzips von dem Differenzierglied 62 gezeigt. Hier ist die bewegliche Wand 64 ortsfest bzw. karosseriefest fixiert und weist wieder die Drossel 65' auf, die die Teile des geschlossenen Ge häuses 63' miteinander verbindet. Zwischen beweglicher Wand 65' und Gehäuse ist jenseits der ortsfesten Verbindung der Wand 65' eine Druckfeder 67' eingesetzt. Das somit relativ bewegliche Gehäuse ist über eine Feder 113 mit einem mit der beweglichen Masse verbundenen Abstützteil 105 gekoppelt, das andererseits mit dem einen Teil des Schalters 61'' verbunden ist. Der andere Teil des Schalters ist mit dem Zylinder bzw. dem geschlossenen Gehäuse 63' verbunden, so daß bei Relativbewegung Zylinder zu Abstützteil 105 der Schalter betätigt wird.

Bei der Ausgestaltung nach Figur 6 ist anstelle eines Nockens 41 oder eines Stellmagneten 53 ein hydraulischer Stellmotor 71 vorgesehen. Dieser besteht aus einer beweglichen Wand, im ausgeführten Beispiel einem Kolben 73, der in einem dichten Gehäuse 74, hier ein Zylinder, dicht verschiebbar ist. Auf der einen Seite ist der Kolben 73 von einer Rückstellfeder 75 beaufschlagt, die bestrebt ist, den Kolben zusammen mit einem aus dem Zylinder 74 zum Saugraum der Kraftstoffeinspritzpumpe 8 hin austretenden Stellzapfen 76 zum Einstellhebel 38 hin zu verstellen. Der Kolben 73 schließt in dem Zylinder 74 auf der Seite des Stellzapfens 76 einen Druckraum 77 ein, der über eine Steuerdruckleitung 78 mit einem fluidischen Verdrängungsorgan 79 als Ruckelgeber verbunden ist. Dieser besteht aus einem Kolben 80, der in einem Zylinder 81 dicht verschiebbar ist und dort ein Fluidvolumen 82 einschließt. Der Kolben 80 ist andererseits über eine Stange 83 mit der elastisch gelagerten Masse verbunden. Die Kolbenzylinder-Kombination 80/81 kann natürlich auch als Membranpumpe ausgeführt sein. Der Zylinder bzw. das Gehäuse der Membranpumpe ist dabei ortsfest mit der Karosserie verbunden.

Von der Steuerleitung 78 zweigt über eine Drossel 85 und einem dieser nachgeschalteten Druckbegrenzungsventil 86 eine Entlastungsleitung 84 ab, die in den Saugraum 16 der Kraftstoffeinspitzpumpe mündet. Mit dieser Entlastungsleitung ist ferner auch der federraumseitige Teil des Zylinders 74 verbunden. Während das Druckbegrenzungsventil 86 zur Entlastungsseite, den Saugraum 16 öffnet, ist parallel zu diesem Ventil ein unmittelbar mit der Steuerleitung 78 verbundenes Füllventil 87 vorgesehen, das ebenfalls als Rückschlagventil ausgebildet ist, aber vom Saugraum 16 her zur Steuerleitung 78 hin öffnet.

Im Betrieb arbeitet die beschriebene Einrichtung folgendermaßen : Führt die elastisch aufgehängte Masse, die Brenn-kraftmaschine 1 eine Querbewegung langsamer Art aus, so verschiebt der Kolben 80 nur eine geringe Fluidmenge pro Zeiteinheit, die nun über die Drossel 85 nach Überschreitung eines Minimaldruckes in der Steuerleitung 78 zum Saugraum 16 hin abgeführt wird. Bewegt sich der Kolben 80 in Richtung Gegenseite, so wird über das Füllventil 87 Kraftstoff aus dem Saugraum 16 nachgesaugt. Auf diese Weise ist das System zwischen Druckraum 77 und Fluidvolumen 82 immer gefüllt. Erfolgt nun eine schnelle Querbewegung der Brennkraftmaschine, so kann sich aufgrund der Drosselung der Drossel 85 ein höherer Druck aufbauen, der in den Druckraum 77 geleitet den Kolben 73 gegen die Kraft der Feder 75 auslenkt, so daß der Stellzapfen 76 vom Einstellhebel 38 weggezogen und die Basiseinstellung der Kraftstoffeinspritzpumpe in Richtung Mindermenge verstellt wird. Einem Drehmomentplus wird auf diese Weise mit einer Verminderung der Kraftstoffeinspritzmenge begegnet. In umgekehrten Fall, einer Bewegung in Gegenrichtung der Brennkraftmaschine wird der Druck im Fluidvolumen abgebaut, so daß der Kolben 73 unter Einwirkung der Rückstellfeder 75 zum Einstellhebel 38 verstellt wird und dieser eine Änderung der basis Einspritzmenge in Richtung Mehrmenge bewirkt. Der Kolben 73 weist einen einstellbaren Anschlag 88 auf, über den hie Größe der Kraftstoffmehrmenge begrenzt wird, so daß die Kraftstoffeinspritzmenge nicht über die Rauchgrenze der Brennkraftmaschine hinausgehen kann. An diesem Anschlag 88 kommt der Kolben 73 unter Einwirkung der Feder 75 zur Anlage, wenn die Bewegungen des Kolbens 80 nicht schnell genug sind, um einen Druckanstieg an der Drossel 85 zu bewirken. In gleicher Weise ist mit einem zweiten Anschlag 89 federseitig vom Kolben 73 die Korrektur in Richtung Minderkraftstoffeinspritzmenge einstellbar. Bei einer solchen Ausgestaltung ist es auch möglich, die Korrekturmenge gewissen dynamischen Bedingungen anzupassen und in Abhängigkeit von Betriebsparametern zu verändern. Bei dieser Ausgestaltung stellt die Drossel 85 als Dämpfungsdrossel zugleich ein Differenzierglied dar, so daß nur schnelle Bewegungsänderungen des Kolbens 80 zu einem Druckanstieg und zu einer Verstellung des Stellzapfens 76 führen. Ohne das Differenzierglied würde die Einrichtung im wesentlichen der Einrichtung gemäß Figur 1 entsprechen, bei der dann das mechanische Gestänge durch ein hydraulisches Gestänge ersetzt wäre.

Beim Ausführungsbeispiel nach Figur 7 ist eine abgewandelte Form der hydraulischen Betätigung des Einstellhebels 38 vorgesehen. Hierzu ist bei der Kraftstoffeinspritzpumpe 8 anstelle des Zylinders 74 zum Beispiel nach Figur 6 ein zum Pumpensaugraum 16 hin offener Zylinder 90 vorgesehen, in dem ein Stellkolben 91 verschiebbar ist, der zwischen seiner Rückseite und dem geschlossenen Ende des Zylinders 90 eine Rückstellfeder 92 einschließt, durch die er an einem Anschlag 93 bewegbar ist. Die dem Pumpensaugraum zugewandte Stirnseite des Kolbens dient dabei als Anschlagfläche und weist einen Zapfen 94 auf, der in Schwenkrichtung des Einstellhebels 38 als Betätigungsorgan des Einstellhebels 38 entgegen der Kraft seiner Rückstellfeder 39 dient. Der auf der Rückseite des Stellkolbens eingeschlossene, die Rückstellfeder 92 aufnehmende Federraum 95 ist mit dem Saugraum über eine Drossel 96 in ständiger Verbindung. Zugleich mündet in den Federraum 95 eine Druckmittelleitung 97 ein, im vorliegenden Fall als Entlastungsleitung ausgebildet, deren Durchtrittsquerschnitte von einem Magnetventil 98 gesteuert wird. Die Druckmittelleitung führt druckentlastet zum Beispiel zum Kraftstoffvorratsbehälter, aus dem die Kraftstoffeinspritzpumpe mit Kraftstoff versorgt oder zur Saugseite der Kraftstoffversorgungspumpe, mit der der Saugraum 16 der Kraftstoffeinspritzpumpe mit Kraftstoff gefüllt wird. Während der Anschlag 93 der Einstellung der korrigierenden Kraftstoffmehrmenge dient und habei auch berücksichtigen muß, daß die maximale Kraftstofteinspritzmenge nicht die Rauchgrenze überschreitet, ist noch ein zweiter Anschlag 99 vorgesehen, durch den die Verstellung des Verstellhebels 38 unmittelbar oder mittelbar über den Stellkolben 91 in Richtung Mindermenge begrenzt wird.

Das Magnetventil 98 der Entlastungsleitung 97 wird nun wiederum entsprechend dem Auftreten eines Ruckelsignals gesteuert, zum Beispiel in analoger Weise zum Ausführungsbeispiel nach Figur 3 oder Figur 4. Dabei kann die Brennkraftmaschine als elastisch gegenüber der karosseriebewegten Masse gegebenenfalls über Zwischenschaltung eines Differenzierglieds 100 einen Schalter 101 im Stromversorgungskreis des Magnetventils 98 schalten, durch das beim Öffnen der Entlastungsleitung 97 der zugleich als Steuerdruckraum dienende Federraum 95 entlastet wird, so daß der Kraftstoffdruck des Saugraumes 16 den Stellkolben 91 gegen die Kraft der Feder 92 verstellt und eine Verstellung des Einstellhebels 38 in Richtung Mindermenge zuläßt, bis dieser zur Anlage an dem zweiter Anschlag 99 kommt. In dieser Version kann auch der Stellkolben 91 über diese Position hinaus zurücklaufen. Schließt dagegen das Magnetventil 98, so kann sich im Federraum 95 über die Drosselverbindung 96 ein Druck aufbauen, der dem Druck im Saugraum 16 entspricht. Hydraulisch druckausgeglichen bewegt sich nun der Stellkolben 91 unter Wirkung der Rückstellfeder 92 hin bis zum Anschlag 93 und korrigiert die Kraftstoffeinspritzmenge in Richtung Mehrmenge. Auch in diesem Fall kann leicht ein aus der Drehzahl gewonnenes elektrisches Antiruckelsignal auf das Magnetventil 98 gegeben werden und somit eine Korrektur an einer Kraftstoffeinspritzpumpe vorgenommen werden, die ansonsten mechanisch geregelt bzw. gesteuert wird. Diese Ausgestaltung hat den Vorteil, daß kein besonderer Stelldruck erzeugt werden muß und daß die Einleitung des Antiruckelsignals bzw. dessen Gewinnung auch bei schwierigsten Einbauverhältnissen einfach durch zuführen ist. Bei Kraftstoffeinspritzpumpen, die keinen Saugraum in der hier gezeigten Art aufweisen, kann der Innenraum in Umkehrung der in Figur 7 gezeigten Lösung auch druckentlastet sein, wobei dann die Druckmittelleitung 97 den Druck zuführt und der Stellkolben in umgekehrter Richtung durch die Feder belastet ist.

Als Ruckelsignalgeber kann auch hier der in Figur 6 gezeigte Geber 80, 81 verwendet werden, der nun statt den Kolben 75 einen Schalter gemäß Figur 4 ansteuert, durch den wiederum das Magnetventil 98 betätigt wird. Der Schalter kann aber auch alternativ einen Stellmagneten gemäß Figur 3 steuern.

Figur 8 zeigt eine andere Eingriffsmöglichkeit bei einer Kraftstoffeinspritzpumpe, die in der gezeigten Form als Alternativlösung zur Ausgestaltung nach Figur 2 anzusehen ist. Hier ist im Schnitt eine Einspritzpumpe gezeigt, die wie beim Ausführungsbeispiel nach Figur 1 einen hin- und hergehenden Pumpenkolben aufweist, der jetzt in der Radialebene geschnitten ist. Auf dem Pumpenkolben ist der ebenfalls von Figur 1 bekannte Ringschieber 19 gelagert, an dem der Verstellhebel 29 eingreift. Zur Koppelung mit dem Ringschieber weist der Verstellhebel 29 an seinem Ende einen Kugelkopf 102 auf, der in eine zur Radialebene bzw. Zeichenebene Figur 8 schräg verlaufende Nut 103 des Ringschiebers eingreift. Am diametral gegenüberliegenden Abschnitt des Ringschiebers ist eine achsparallele Längsnut 104 vorgesehen, in die ebenfalls ein Kugelkopf 105 eingreift. Solange her Kugelkopf 105 seine Lage beibehält, kann der Ringschieber 19 in der durch Figur 1 bekannten Weise durch den Verstellhebel 29 axial hin- und herbewegt werden, ohne daß er eine Drehbewegung mitmacht. Auf diese Weise bleibt die Zuordnung des Kugelkopfes 102 zu einer Ausgangslage an der Nut 103 bestehen.

Der Kugelkopf 105 sitzt nun am Ende des einen Armes 106 eines Hebels, der um eine zur Achse des Pumpenkolbens achsparallelen Achse 107 schwenkbar ist und an seinem anderen Ende eine träge Masse 108 aufweist, die zwischen einem ersten Anschlag 109 und einem zweiten Anschlag 110 schwenkbar ist. Wenigstens einer der Anschläge ist einstellbar ausgebildet und es wird die Masse 108 durch wenigstens eine Haltefeder 111 an einem der Anschläge 109 gehalten. Die Masse 108 befindet sich dabei im Saugraum 16 der Kraftstoffeinspritzpumpe und ist von unter Druck gebrachtem Kraftstoff umgeben. Führt die Karosserie Ruckelbewegungen aus, so kann die träge Masse 108 Relativbewegungen entgegen der Haltefeder 111 ausführen und dabei den Ringschieber 19 drehen. Durch diese Drehung gelangt der Kopf 102 in andere Bereiche der schrägen Nut 103, wodurch die Lage des Kopplungspunktes des Kopfes 102 am Ringschieber in Einspritzmengenverstellrichtung, hier also in Längsrichtung des Pumpenkolbens, bzw., der Ringschieber 19 einspritzmengensteuerwirksam in seiner Einspritzmengenverstellrichtung verschoben wird. Somit kann auch auf diese Weise eine Grundeinstellung der Kraftstoffeinspritzpumpe vorgenommen werden, wobei das das Ruckeln erfassende Glied und das Betätigungsorgan kombiniert innerhalb der Kraftstoffeinspritzpumpe untergebracht sind. Dies hat den Vorteil, daß die Korrekturmaßnahmen unabhängig von Maßnahmen am Einbauort in Verbindung zur Karosserie vorgenommen werden können.

Neben den hier aufgeführten Eingriffsmöglichkeiten über verschiedene Arten von Grundeinstelleinrichtungen läßt sich der Gegenstand der Erfindung auch bei anderen Grundeinstelleinrichtungen durchführen. Wird statt des zur Mengenverstellung axial verstellbaren Ringschiebers 19 ein Ringschieber verwendet, der zur Mengenverstellung verdreht wird und der zur Änderung des variablen förderungswirksamen Pumpenkolbenhubs schräge Steuerkanten aufweist, so kann statt des in Figur 8 gezeigten Eingriffs auch eine Hubverstellung des Ringschiebers durchgeführt werden. Genau so gut läßt sich aber das Verdrehen des Ringschiebers 19 oder das Umverstellen des Ringschiebers 19 über Betätigungsorgane vornehmen analog zu den Ausgestaltungen von Figur 1 bis 7 auch in Abhängigkeit von elektrisch gebildeten Antiruckelsignalen.

Ein aus der Drehzahl abgeleitetes Antiruckelsignal oder Steuergröße ist aber auch auf mechanischem Weg erzielbar, indem das Ruckelsignal für das daraus zu bildende Antiruckelsignal aus zum Beispiel einem drehzahlsynchron gebildeten Saudraumdruck der Kraftstoffeinspritzpumpe abgeleitet wird.

## Ansprüche

1. Kraftstoffeinspritzpumpe zur Versorgung der Brennräume von für Fahrzeugantriebe vorgesehene Brennkraftmaschinen mit einem Kraftstoffördermengenverstellorgan (19), das durch eine Kraftstoffmengensteuer- oder -regeleinrichtung (20) entsprechend Betriebsparametern der Brennkraftmaschine verstellbar ist und durch eine zusätzliche Verstelleinrichtung (41, 53, 71, 91, 105) entsprechend einem in Abhängigkeit vom Auftreten von als Ruckeln bezeichneten schnellen Drehzahländerungen der Brennkraftmaschine oder Relativbewegungen am Fahrzeug gebildeten, dem Ruckeln durch Kraftstofffördermengenänderung entgegenwirkenden Antiruckelsignal verstellbar ist, wobei als Verstelleinrichtung ein vom Antiruckelsignal gesteuertes Betätigungsorgan (41, 53, 71, 91, 105) vorgesehen ist, dadurch gekennzeichnet, daß durch das Betätigungsorgan eine Einstellorgan (38, 19, 104, 102,103) betätigt und durch dieses die Lage einer Achse (30) eines das Kraftstofffördermengenverstellorgan (19) verstellenden Verstellhebels (29) der Kraftstoffmengensteuer- oder -regeleinrichtung (20) oder die Lage des Kopplungspunktes dieses Verstellhebels (29) am Kraftstofffördermengenverstellorgan (19) in Mengenverstellrichtung des selben wenigstens um einen bestimmten konstanten Betrag bewegbar ist.

2. Krafttoffeinspritzpumpe nach Anspruch 1, dadurch gekennzeichnet, daß die Kraftstoffeinspritzpumpe einen hin- und hergehenden Pumpenkolben aufweist, auf dem ein als Fördermengenverstellorgan dienender Ringschieber (19) von der Kraftstoffmengensteuer- oder -regeleinrichtung (20) über den Verstellhebel (29) verschiebbar oder verdrehbar ist zur Steuerung einer vom Pumpenkolben (11) bewegten Entlastungsöffnung (15), die mit dem Pumpenarbeitsraum (12) verbunden ist

3. Kraftstoffeinspritzpumpe nach Anspruch 2, dadurch gekennzeichnet, daß der Verstellhebel (29) über eine zur Steuerbewegung des Ringschiebers (19) schräg verlaufende Nut (103) mit dem Ringschieber (19) gekoppelt ist und der Ringschieber über eine in Steuerbewegungsrichtung verlaufende Nut (104) mit dem Betätigungsorgan (105,106, 108) gekoppelt ist und durch dieses quer zur Steuerbewegungsrichtung des Ringschiebers (19) verstellbar ist.

4. Kraftstoffeinspritzpumpe nach Anspruch 1 bis 3, dadurch gekennzeichnet, daß das Ruckeln durch die Relativbewegung einer elastisch relativ zur Karosserie (3) des von der Brennkraftmaschine angetriebenen Fahrzeugs gelagerten Masse (1, 47, 108) erfaßt wird und die Relativbewegung wenigstens mittelbar als Antiruckelsignal verwendet wird.

5. Kraftstoffeinspritzpumpe nach Anspruch 4, dadurch gekennzeichnet, daß die Relativbewegung über ein Differen zierglied (45, 50, 51, 62, 85, 100) in das Antiruckelsignal ungewandelt wird.

6. Kraftstoffeinspritzpumpe nach Anspruch 4, dadurch gekennzeichnet, daß die Relativbewegung als Drehzahlsignal erfaßt wird und über ein Differenzierglied in das Antiruckelsignal umgewandelt wird.

7. Kraftstoffeinspritzpumpe nach Anspruch 4 bis 5, dadurch gekennzeichnet, daß die elastisch gelagerte Masse die Brennkraftmaschine ist, deren Relativbewegung zur Karosserie als Ruckelsignal erfaßt und als Antiruckelsignal übertragen wird.

8. Kraftstoffeinspritzpumpe nach Anspruch 4 bis 5, dadurch gekennzeichnet, daß die elastisch gelagerte Masse ein zwischen Federn (48, 49) aufgehängtes und mit der Kraft stoffeinspritzpumpe oder Brennkraftmaschine verbundenes, vorzugsweise pendelndes Teil (47, 108) ist.

9. Kraftstoffeinspritzpumpe nach Anspruch 8, dadurch gekennzeichnet, daß das Pendel sich über einen Dämpfer (50, 51) an der Karosserie (3) abstützt.

10. Kraftstoffeinspritzpumpe nach Anspruch 8, dadurch gekennzeichnet, daß sich das Pendel über einen Dämpfer an seinem Aufhängeort abstützt.

11. Kraftstoffeinspritzpumpe nach Anspruch 8 oder 10, dadurch gekennzeichnet, daß des Pendel (108) sich im Innern der Kraftstoffeinspritzpumpe befindet und mit einem Betätigungsarm (105) auf die Grundeinstellung des Fördermengenverstellorgans wirkt.

12. Kraftstoffeinspritzpumpe nach einem der vorstehenden Ansprüche, dadurch gekennzeichnet, daß das Einstellorgan ein durch eine Rückstellkraft (39) elastisch an einem Anschlag (40, 41, 42 oder 43) bringbaren Hebel (38) aufweist.

13. Kraftstoffeinspritzpumpe nach Anspruch 12, dadurch gekennzeichnet, daß der Hebel (38) und das Betätigungsorgan (41) im Innern (16) der Kraftstoffeinspritzpumpe angeordnet sind.

14. Kraftstoffeinspritzpumpe nach einem der vorstehenden Ansprüche, dadurch gekennzeichnet, daß als Betätigungsorgan ein verdrehbarer Nocken (41) dient.

15. Kraftstoffeinspritzpumpe nach Anspruch 1 bis 13, dadurch gekennzeichnet, daß als Betätigurgsorgan ein hydraulischer Stellmotor (71) dient, dessen bewegliche Wand (73) zwischen Begrenzungsanschlägen (88, 89) bewegbar ist.

16. Kraftstoffeinspritzpumpe nach einem der Ansprüche 1 bis 13, dadurch gekennzeichnet, daß als Betätigungsorgan ein Stellmagnet (53) dient, dessen Anker (55) zwischen Begrenzungsanschlägen (58, 57) bewegbar ist und dessen Stromkreis zum Auslösen einer Stellbewegung über einen entsprechend dem Antiruckelsignal betätigbaren Schalter (61) gesteuert wird.

17. Kraftstoffeinspritzpumpe nach Anspruch 14, dadurch gekennzeichnet, daß der Nocken (41) über einen zwischen Anschlägen (42,43) bewegbaren Hebel (6) mit einer mechanischen Übertragungseinrichtung (5) der Relativbewegung der elastisch gegenüber der Karosserie (3) des Fahrzeugs gelagerten Masse direkt verbunden ist (Figur 1 + 2).

18. Kraftstoffeinspritzpumpe nach Anspruch 17, dadurch gekennzeichnet, daß in die Übertragungseinrichtung (5) ein Differenzierglied (45) geschaltet ist.

19. Kraftstoffeinspritzpumpe nach Anspruch 14 oder 15, dadurch gekennzeichnet, daß als Ruckelsignalgeber ein fluidisches Verdrängungsorgan (80, 81) vorgesehen ist, das mit der elastisch gelagerten Masse (1) einerseits und der Karosserie (3) des Fahrzeugs andererseits verbunden ist und durch dessen Arbeitsbewegung, ausgelöst durch die Relativbewegung der elastisch gelagerten Masse ein Fluidvolumen (82) hin- oder herbewegt wird, durch das entsprechend ein die Stellbewegung des Betätigungsorgans (73,76) auslösende bewegliche wand (73) verstellbar ist (Figur 6).

20. Kraftstoffeinspritzpumpe nach Anspruch 19, dadurch gekennzeichnet, daß die bewegliche wand mit einem in einem elektrischen Stromkreis liegenden Schalter (61') gekoppelt ist, durch den ein das Betätigungsorgan (55) steuernder Energiefluß gesteuert wird (Figur 4 + 6).

21. Kraftstoffeinspritzpumpe nach Anspruch 16, dadurch gekennzeichnet, daß der Schalter (61) einerseits mit der elastisch gelagerten Masse (1) und andererseits mit der Karosserie (3) verbunden ist (Figur 3).

22. Kraftstoffeinspritzpumpe nach Anspruch 16 oder 21, dadurch gekennzeichnet, daß durch den Schalter (101) der Stromkreis eines Magnetventils (98) geschaltet wird, das mit seinem Ventilschließglied einen Druckmittelanschluß (97) eines Steuerdruckraumes (95) an eine erste Druckmittelquelle steuert, wobei der Steuerdruckraum (95) über eine Drossel ständig mit einer zweiten Druckquelle (16) verbunden ist und von einer als Betätigungsorgan dienenden beweglichen Wand (91) begrenzt wird, die andererseits vom Druck der zweiten Druckquelle (16) belastet ist und von einer Rückstellfeder (62) beaufschlagt ist, durch die die bewegliche Wand zur Druckquelle mit höherem Druckniveau (16) hin beaufschlagt wird (Figur 7).

23. Kraftstoffeinspritzpumpe nach Anspruch 19 bis 22, dadurch gekennzeichnet, daß in die Verbindung elastisch aufgehängte Masse-Schalter-Karosserie ein Differenzierglied geschaltet ist, durch das die schnelle Lageänderung der Masse in das Antiruckelsignal gewandelt wird.

24. Kraftstoffeinspritzpumpe nach Anspruch 23, dadurch gekennzeichnet, daß das Differenzierglied aus einer Stoßdämpfereinheit besteht, über die der Schalter bei langsamen Lageänderungen der elastisch aufgehängten Masse insbesondere der Brennkraftmaschine in Ausgangsposition gehalten wird und bei schnellen Lageänderungen geschaltet wird.

25. Kraftstoffeinspritzpumpe nach Anspruch 19, dadurch gekennzeichnet, daß das Fluidvolumen (82) über eine Drossel (85) mit einer Fluiddruckquelle (16) verbunden ist, von der zum Fluidvolumen (82) eine Verbindung über ein zum Fluidvolumen hin öffnendes Rückschlag (87) besteht.

26. Kraftstoffeinspritzpumpe nach Anspruch 25, dadurch gekennzeichnet, daß in der über die Drossel (85) zur Fluidquelle (16) hin führenden verbindung (84) eine zur Fluiddruckquelle öffendes Druckhalteventil (86) vorgesehen ist.

27. Kraftstoffeinspritzpumpe nach Anspruch 24, dadurch gekennzeichnet, daß das Differenzierglied (62) ein ortsfestes mit der Karosserie (3) verbundenes, geschlossenes Gehäuse (63) aufweist, in dem dicht eine verstellbare Wand (64) eingesetzt ist, die durch eine Drossel (65) überbrückt ist und die von einer sich an einem Federteller (66) abstützenden Druckfeder (67) belastet ist und andererseits mit einem der Schaltkontakte des Schalters (61') verbunden ist und daß ferner am Federteller (66) drosselungsfreie Übertrittsquerschnitte vorgesehen sind und der Federteller direkt mit der elastisch aufgehängten Masse (1) sowie mit dem anderen der Schaltkontakte des Schalters (61') gekoppelt ist.

28. Kraftstoffeinspritzpumpe nach Anspruch 24, dadurch gekennzeichnet, daß das Differenzierglied ein geschlossenes Gehäuses (63') aufweist, in der dicht eine verstellbare Wand (64') eingesetzt ist, die durch eine Drossel (65') überbrückt ist und mit einem mit der elastisch aufgehängten Masse (1) verbundenen Abstützteil (105), zwischen dem und den Gehäuse eine Feder (113) eingesetzt ist und das mit einem der Schaltkontakte des Schalters (61") verbunden ist, dessen anderer Schaltkontakt mit den Zylinder (63') verbunden ist.

## Claims

1. Fuel injection pump for supplying the combustion chambers of internal combustion engines provided for vehicle propulsion units, having a fuel delivery quantity adjusting element (19), which can be adjusted by a fuel quantity controlling or regulating device (20) in accordance with operating parameters of the internal combustion engine and can be adjusted by an additional adjusting device (41, 53, 71, 91, 105) in accordance with an anti-bucking signal, which is formed as a function of the occurrence of rapid variations in speed of the internal combustion engine or relative movements on the vehicle, which variations or movements are designated as bucking, and which counteracts the bucking by varying the fuel delivery quantity, an actuating element (41,53,71,91,105) controlled by the anti-bucking signal being provided as the adjusting device, characterized in that the actuating element actuates a setting element (38,19,104, 102, 103) and by means of the latter the position of an axis (30) of an adjusting lever (29) of the fuel quantity controlling or regulating device (20) which adjusts the fuel delivery quantity adjusting element (19), or the position of the coupling point of this adjusting lever (29) on the fuel delivery quantity adjusting element (19) can be moved in the quantity adjusting direction of the latter at least by a specific constant amount.

2. Fuel injection pump according to Claim 1, characterized in that the fuel injection pump has a pump piston moving to and fro, on which an annular slide valve (19) serving as the delivery quantity adjusting element can be displaced or rotated by the fuel quantity controlling or regulating device (20) via the adjusting lever (29) for the purpose of controlling a relief opening (15), which is moved by the pump piston (11) and is connected to the pump working chamber (12).

3. Fuel injection pump according to Claim 2, characterized in that the adjusting lever (29) is coupled to the annular slide valve (19) via a groove (103) extending obliquely to the control movement of the annular slide valve (19), and the annular slide valve is coupled via a groove (104) extending in the direction of the control movement to the actuating organ (105, 106, 108), and can be displaced by the latter transversely to the direction of the control movement of the annular slide valve (19).

4. Fuel injection pump according to Claims 1 to 3, characterized in that the bucking is detected by the relative movement of a mass (1, 47, 108) which is mounted elastically relative to the body (3) of the vehicle driven by the internal combustion engine, and the relative movement is used at least indirectly as the antibucking signal.

5. Fuel injection pump according to Claim 4, characterized in that the relative movement is converted into the anti-bucking signal via a differentiating element (45, 50, 51, 62, 85, 100).

6. Fuel injection pump according to Claim 4, characterized in that the relative movement is detected as a rotational speed signal and is converted into the anti-bucking signal via a differentiating element.

7. Fuel injection pump according to Claims 4 to 5, characterized in that the elastically mounted mass is the internal combustion engine, the movement of which relative to the body is detected as a bucking signal and transmitted as the anti-bucking signal.

8. Fuel injection pump according to Claims 4 to 5, characterized in that the elastically mounted mass is a preferably oscillating part (47, 108), which is suspended between springs (48, 49) and connected to the fuel injection pump or internal combustion engine.

9. Fuel injection pump according to Claim 8, characterized in that the pendulum is supported on the body (3) via a damper (50, 51).

10. Fuel injection pump according to Claim 8, characterized in that the pendulum is supported on its suspension point via a damper.

11. Fuel injection pump according to Claim 8 or 10, characterized in that the pendulum (108) is located in the interior of the fuel injection pump and acts by means of an actuating arm (105) on the basic setting of the delivery quantity adjusting element.

12. Fuel injection pump according to one of the preceding claims, characterized in that the setting element has a lever (38) that can be brought elastically through a restoring force (39) onto a stop (40, 41, 42 or 43).

13. Fuel injection pump according to Claim 12, characterized in that the lever (38) and the actuating element (41) are arranged in the interior (16) of the fuel injection pump.

14. Fuel injection pump according to one of the preceding claims, characterized in that a rotatable cam (41) serves as the actuating element.

15. Fuel injection pump according to Claims 1 to 13, characterized in that a hydraulic positioning motor (71), the movable wall (73) of which can be moved between limiting stops (88, 89), serves as the actuating element.

16. Fuel injection pump according to one of Claims 1 to 13, characterized in that serving as the actuating element is a positioning magnet (53), the armature (55) of which can be moved between limiting stops (58, 57), and the circuit of which is controlled, for the purpose of initiating a positioning movement, via a switch (61) which can be actuated in accordance with the anti-bucking signal.

17. Fuel injection pump according to Claim 14, characterized in that the cam (41) is directly connected via a lever (6), which can be moved between stops (42, 43), to a mechanical transmission device (5) of the relative movement of the mass which is mounted elastically with respect to the body (3) of the vehicle (Figures 1 + 2).

18. Fuel injection pump according to Claim 17, characterised in that a differentiating element (45) is inserted into the transmission device (5).

19. Fuel injection pump according to Claim 14 or 15, characterized in that provided as the bucking-signal transducer is a fluidic displacement element (80, 81), which is connected, on the one hand, to the elastically mounted mass (1) and, on the other hand, to the body (3) of the vehicle, and through the working movement of which, initiated by the relative movement of the elastically mounted mass, a fluid volume (82) is moved to and fro, by means of which a movable wall (73) which initiates the positioning movement of the actuating element (73, 76) can be correspondingly adjusted (Figure 6).

20. Fuel injection pump according to Claim 19, characterized in that the movable wall is coupled to a switch (61') located in an electric circuit, by means of which an energy flux which controls the actuating element (55) is controlled (Figures 4 + 6).

21. Fuel injection pump according to Claim 16, characterised in that the switch (61) is connected, on the one hand, to the elastically mounted mass (1) and, on the other hand, to the body (3) (Figure 3).

22. Fuel injection pump according to Claim 16 or 21, characterized in that the switch (101) operates the circuit of an electromagnetic valve (98), which controls with its valve closing element a pressure medium connection (97) of a control pressure chamber (95) at a first pressure medium source, the control pressure chamber (95) being connected permanently to a second pressure source (16) via a throttle and being limited by a movable wall (91), which serves as the actuating element and is, on the other hand, loaded by the pressure of the second pressure source (16) and to which a return spring (62) is applied, which acts on the movable wall towards the pressure source having a higher pressure level (16) (Figure 7).

23. Fuel injection pump according to Claims 19 to 22, characterized in that there is inserted into the connection of the elastically suspended mass-switch-body a differentiating element by means of which the rapid variation in position of the mass is converted into the anti-bucking signal.

24. Fuel injection pump according to Claim 23, characterized in that the differentiating element consists of a shock absorber unit, via which the switch is held in the starting position in the case of slow variations in position of the elastically suspended mass, in particular of the internal combustion engine, and is operated in the case of rapid variations in position.

25. Fuel injection pump according to Claim 19, characterized in that the fluid volume (82) is connected via a throttle (85) to a fluid pressure source (16), from which a connection exists to the fluid volume (82) via a non-return valve (87) open towards the fluid volume.

26. Fuel injection pump according to Claim 25, characterized in that a pressure-maintaining valve (86) open towards the fluid pressure source is provided in the connection (84) leading to the fluid source (16) via the throttle (85).

27. Fuel injection pump according to Claim 24, characterized in that the differentiating element (62) has a closed housing (63), which is connected in a fixed fashion to the body (3) and in which there is sealingly inserted an adjustable wall (64), which is bridged by a throttle (65) and which is loaded by a pressure spring (67) supported on a spring plate (66), and is, on the other hand, connected to one of the switch contacts of the switch (61'), and in that, further, unthrottled overflow cross-sections are provided on the spring plate (66) and the spring plate is coupled directly to the elastically suspended mass (1) and to the other of the switch contacts of the switch (61').

28. Fuel injection pump according to Claim 24, characterized in that the differentiating element has a closed housing (63'), in which an adjustable wall (64') is sealingly inserted, which is bridged by a throttle (65') and is connected to a supporting part (105), which is connected to the elastically suspended mass (1) and between which and the housing a spring (113) is inserted, and which is connected to one of the switch contacts of the switch (61"), whose other switch contact is connected to the cylinder (63').

**Revendications**

1. Pompe d'injection de carburant destinée à alimenter les chambres de combustion des moteurs à combustion interne servant à l'entraînement d'un véhicule, avec un organe de dosage de carburant (19) qui se règle par une installation de réglage ou de commande de carburant (20) selon des paramètres de fonctionnement du moteur à combustion interne ainsi que par une installation de réglage supplémentaire (41, 53, 71, 91, 105) selon un signal anti-secousse formé en fonction de la présence de variations rapides de vitesse de rotation du moteur ou de mouvements relatifs du véhicule appelés secousses, signal anti-secousse agissant contre les secousses par modification du dosage du carburant, l'installation de réglage étant un organe de manoeuvre (41, 53, 71, 91, 105) commandé par le signal anti-recul, pompe caractérisée en ce que l'organe de manoeuvre actionne un organe de réglage (38, 19, 104, 102, 103) et celui-ci déplace la position de l'axe (30) d'un levier de réglage (29) réglant l'organe de dosage de carburant (19) dans l'installation de réglage et de commande de carburant (20) ou la position du point de couplage de ce levier de réglage (29) et de l'organe de dosage de carburant (19) dans le sens d'un réglage de quantité de cet organe, au moins d'une certaine valeur constante.

2. Pompe d'injection de carburant selon la revendication 1, caractérisée en ce que la pompe d'injection comporte un piston de pompe à mouvements alternatifs sur lequel peut coulisser ou tourner un tiroir annulaire (19) servant d'organe de réglage de débit de l'installation de réglage ou de commande de carburant (20) par l'intermédiaire du levier de réglage (29) pour commander une ouverture de décharge (15) déplacée par le piston de pompe (11), ouverture qui est reliée à la chambre (12) de la pompe.

3. Pompe d'injection de carburant selon la revendication 2, caractérisée en ce que le levier de réglage (29) est couplé par une rainure (103) inclinée par rapport au mouvement de commande du tiroir annulaire (19) avec ce tiroir annulaire (19) et ce dernier est couplé à l'organe de manoeuvre (105, 106,108) par une rainure (104) dirigée dans la direction du mouvement de commande et cet organe est déplacé transversalement à la direction du mouvement de commande du tiroir annulaire (19).

4. Pompe d'injection de carburant selon les revendications 1 à 3, caractérisée en ce que les secousses sont captées sous la forme du mouvement relatif d'une masse (1, 47, 108) montée élastiquement par rapport à la carrosserie (3) du véhicule entraîné par le moteur à combustion interne et utilisant le mouvement relatif au moins indirectement comme signal anti-secousse.

5. Pompe d'injection de carburant selon la revendication 4, caractérisée en ce que le mouvement relatif est transformé en un signal anti-recul par l'intermédiaire d'un élément différentiateur (45, 50, 51, 62, 85, 100).

6. Pompe d'injection de carburant selon la revendication 4, caractérisée en ce que le mouvement relatif est capté comme signal de vitesse de rotation pour être transformé en un signal anti-secousse par l'intermédiaire d'un élément différentiateur.

7. Pompe d'injection de carburant selon les revendications 4 et 5, caractérisée en ce que la masse montée élastiquement est le moteur à combustion interne dont le mouvement relatif par rapport à la carrosserie est capté comme signal de secousse pour être transformé en un signal anti-secousse.

8. Pompe d'injection de carburant selon les revendications 4 et 5, caractérisée en ce que la masse montée élastiquement est une pièce de préférence pendulaire (47, 108) suspendue entre des ressorts (48,49) et reliée à la pompe d'injection de carburant ou au moteur à combustion interne.

9. Pompe d'injection de carburant selon la revendication 8, caractérisée en ce que l'élément pendulaire s'appuie sur la carrosserie (3) par l'intermédiaire d'un amortisseur (50, 51).

10. Pompe d'injection de carburant selon la revendication 8, caractérisée en ce que l'élément pendulaire s'appuie en un point de suspension par l'intermédiaire d'un amortisseur.

11. Pompe d'injection de carburant selon la revendication 8 ou 10, caractérisée en ce que l'élément pendulaire (108) est logé à l'intérieur de la pompe d'injection et coopère avec un bras de manoeuvre (105) pour agir sur le réglage de base de l'organe de dosage de carburant.

12. Pompe d'injection de carburant selon l'une des revendications précédentes, caractérisée en ce que l'organe de réglage comporte un levier (38) qui peut être conduit élastiquement contre une butée (40, 41, 42 ou 43) par une force de rappel (39).

13. Pompe d'injection de carburant selon la revendication 12, caractérisée en ce que le levier (38) et l'organe de manoeuvre (41) sont logés à l'intérieur (16) de la pompe d'injection de carburant.

14. Pompe d'injection de carburant selon l'une des revendications précédentes, caractérisée en ce que l'organe de manoeuvre est une came tournante (41).

15. Pompe d'injection de carburant selon les revendications 1 à 13, caractérisée en ce que l'organe de manoeuvre est un moteur de réglage (71) hydraulique dont la cloison mobile (73) est mobile entre des butées de limitation de course (88, 89).

16. Pompe d'injection de carburant selon l'une des revendications 1 à 13, caractérisée en ce que l'organe de manoeuvre est un électro-aimant de réglage (53) dont l'induit (55) est mobile entre des butées de fin de course (58, 57) et dont le circuit électrique est commandé par un interrupteur actionné en fonction du signal anti-recul pour déclencher un mouvement de réglage.

17. Pompe d'injection de carburant selon la revendication 14, caractérisée en ce que la came (41) est reliée directement à la masse montée élastiquement sur la carrosserie (3) du véhicule par un levier (6) mobile entre les butées (42, 43) avec une installation de transmission mécanique (5) du mouvement relatif (figures 1 + 2).

18. Pompe d'injection de carburant selon la revendication 17, caractérisée par un élément différentiateur (45) branché sur l'installation de transmission (5).

19. Pompe d'injection de carburant selon la revendication 14 ou 15, caractérisée en ce que le capteur de signal de secousse est un organe de refoulement fluidique (80, 81) qui est d'une part relié à la masse montée élastiquement (1) et d'autre part à la carrosserie (3) du véhicule et dont la course utile déclenchée par le mouvement relatif de la masse montée élastiquement déplace alternativement une capacité à fluide (82) qui règle une cloison mobile (73) déclenchant le mouvement de réglage de l'organe de manoeuvre (73, 76) de façon correspondante (figure 6).

20. Pompe d'injection de carburant selon la revendication 19, caractérisée en ce que la cloison mobile est couplée à un interrupteur (61') placé dans un circuit électrique qui commande le flux d'énergie commandant l'organe de manoeuvre (55) (figures 4 et 6).

21. Pompe d'injection de carburant selon la revendication 16, caractérisée en ce que l'interrupteur (61) est d'une part relié à la masse montée élastiquement (1) et d'autre part à la carrosserie (3) (figure 3).

22. Pompe d'injection de carburant selon la revendication 16 ou 21, caractérisée en ce que l'interrupteur (101) commute le circuit électrique d'une électrovanne (98) dont l'organe d'obturation commande un branchement de fluide sous pression (97) d'une chambre de commande de pression (95) sur une première source de fluide sous pression, la chambre de pression de commande (95) étant reliée en permanence à une seconde source de pression (16) par l'intermédiaire d'un organe d'étranglement et elle est délimitée par une cloison mobile (91) servant d'organe de manoeuvre, cette cloison étant par ailleurs chargée par la pression de la seconde source de pression (16) et est sollicitée par un ressort de rappel (62) qui sollicite la cloison mobile vers la source de pression avec un niveau de pression plus élevé (16) (figure 7).

23. Pompe d'injection de carburant selon les revendications 19 à 22, caractérisée en ce que dans la liaison de la masse suspendue élastiquement, de l'interrupteur et de la carrosserie, il est prévu un élément différentiateur qui transforme les variations rapides de position de la masse en un signal anti-recul.

24. Pompe d'injection de carburant selon la revendication 23, caractérisée en ce que l'élément différentiateur se compose d'un élément d'amortissement de choc qui maintient en position de repos l'interrupteur pour des variations de position lentes de la masse suspendue élastiquement notamment du moteur à combustion interne et commute cet interrupteur pour des variations rapides de position.

25. Pompe d'injection de carburant selon la revendication 19, caractérisée en ce que la capacité à fluide (82) est reliée par un organe d'étranglement (85) à une source de fluide sous pression (16) et entre la capacité (82) et la source (16), il y a une liaison par l'intermédiaire d'un clapet anti-retour (87) ouvert en direction de la capacité à fluide.

26. Pompe d'injection de carburant selon la revendication 25, caractérisée en ce que dans la liaison (84) allant vers la source de fluide (16) par l'intermédiaire de l'organe d'étranglement (85), il est prévu un clapet de retenue de pression (86) s'ouvrant en direction de la source de fluide sous pression.

27. Pompe d'injection de carburant selon la revendication 24, caractérisée en ce que l'élément différentiateur (62) comporte un boîtier (63) fermé, relié solidairement à la carrosserie (3), boîtier dans lequel se trouve une cloison réglable (64) de manière étanche qui est court-circuitée par un organe d'étranglement (65) et est chargée par un ressort de compression (67) qui s'appuie contre une coupelle à ressort (66) et qui est par ailleurs relié à l'un des contacts de commutation de l'interrupteur (61') et en outre comporte des sections de passage sans étranglement au niveau de la coupelle à ressort (66), cette coupelle étant couplée directement à la masse (1) suspendue élastiquement ainsi qu'à l'autre contact de l'interrupteur (61').

28. Pompe d'injection de carburant selon la revendication 24, caractérisée en ce que l'élément différentiateur comporte un boîtier fermé (63') contenant une cloison (64') réglable de manière étanche qui est court-circuitée par un organe d'étranglement (65') et est placée avec une partie d'appui (105) reliée à la masse élastiquement suspendue (1), avec un ressort (113) accroché entre cette partie et le boîtier en étant reliée à l'un des contacts de l'interrupteur (61") dont l'autre contact de commutation est relié au cylindre (63).

FIG.1

FIG.2

FIG.3

FIG.4

FIG.5

FIG.6

**FIG.7**

**FIG.8**